# EUROPEAN PATENT APPLICATION

(11) **EP 4 772 867 A1**
(43) Date of publication of application: **08.07.2026**
(21) Application number: 24860006.6
(22) Date of filing: 30.08.2024
(51) Int. Cl.: G01N 23/223, G21K 5/00

(54) **FLUORESCENT X-RAY ANALYSIS DEVICE**

(30) Priority: 01.09.2023 JP 2023142434
(71) Applicant: Rigaku Corporation, Akishima-shi Tokyo 196-8666 (JP)
(72) Inventor: IKESAKA, Kenji, Takatsuki-shi, Osaka 569-1146 (JP); TANAKA, Yoshiaki, Takatsuki-shi, Osaka 569-1146 (JP)
(74) Representative: Lambacher, Michael
(86) International application number: PCT/JP2024/031413
(87) International publication number: WO 2025/047981

(57) **Abstract**

To prevent an intensity of fluorescent X-rays to be detected from being reduced, to achieve high analytical accuracy and short measurement time, provided is an X-ray fluorescence spectrometer, which includes: a sample chamber in which a sample is to be arranged; and an irradiation chamber divided from the sample chamber by a partition wall, the X-ray fluorescence spectrometer including: an X-ray source arranged in the irradiation chamber, the X-ray source being configured to obliquely apply X-rays toward an opening formed in a division wall between the sample chamber and the irradiation chamber; a window frame member configured to hold a partition film which is formed from a material that transmits the X-rays and forms a part of the partition wall, the window frame member being arranged within the opening formed in the division wall; and a film supporting member having an elongated hole for allowing the X-rays to pass therethrough, the film supporting member being arranged adjacent to the irradiation chamber side of the partition film to support the partition film from the irradiation chamber side. In plan view as viewed from the sample chamber side toward the irradiation chamber side, the film supporting member is arranged so that the elongated hole is parallel to an optical axis of the X-rays.

## Description

### Technical Field

The present invention relates to an X-ray fluorescence spectrometer.

### Background Art

As an apparatus for analyzing an element contained in a sample, an X-ray fluorescence spectrometer has been known. The X-ray fluorescence spectrometer irradiates a sample with primary X-rays, and performs analysis based on an intensity and energy of fluorescent X-rays exiting the sample. There has also been known a simple X-ray fluorescence spectrometer having a structure in which a sample chamber and an irradiation chamber are separated from each other by a partition membrane so that contamination inside of the spectrometer by the sample can be prevented. For example, in Patent Literature 1, there is disclosed an X-ray detecting apparatus in which a sample placement member for fixing an X-ray transmitting membrane in an expanded state without warpage, wrinkles, folding, or the like is arranged between the sample chamber and the irradiation chamber.

### Citation List

### Patent Literature

[PTL 1] JP 2014-38035 A

### Summary of Invention

### Technical Problem

When light elements in the sample are to be analyzed, it is necessary to replace the air in the X-ray path with helium or create a vacuum, because x-ray attenuation due to air is large, but supply or acquisition of helium may be difficult. When the sample is liquid, the sample cannot be placed under vacuum, and hence it is required to achieve a vacuum in the irradiation chamber while keeping atmospheric pressure in the sample chamber. However, the X-ray detecting apparatus of Patent Literature 1 does not assume occurrence of a pressure difference between a front surface and a back surface of the X-ray transmitting membrane. Accordingly, when measurement is performed in a state in which a pressure difference has been caused between the front surface and the back surface of the X-ray transmitting membrane, it is required to take measures such as reducing the size of a perfect-circle through hole provided in the sample placement member or forming the through hole into a mesh shape. However, an X-ray irradiator irradiates the sample with X-rays obliquely, and hence the X-rays are blocked by the sample placement member when those measures are taken, resulting in a reduction in area of the sample that is irradiated with the X-rays. In this case, the intensity of the fluorescent X-rays to be detected is reduced which causes a reduction in analytical accuracy and an increase in measurement time.

The present disclosure has been made in view of the above-mentioned problems, and has an object to provide an X-ray fluorescence spectrometer in which a partition film is provided between a sample chamber and an irradiation chamber. The X-ray fluorescence spectrometer prevents an intensity of fluorescent X-rays to be detected from being reduced, to achieve high analytical accuracy and short measurement time.

### Solution to Problem

(1) According to one aspect of the present disclosure, there is provided an X-ray fluorescence spectrometer, which includes: a sample chamber in which a sample is to be arranged; and an irradiation chamber divided from the sample chamber by a partition wall, the X-ray fluorescence spectrometer including: an X-ray source arranged in the irradiation chamber, the X-ray source being configured to obliquely apply X-rays toward an opening formed in a division wall between the sample chamber and the irradiation chamber; a window frame member configured to hold a partition film which is formed from a material that transmits the X-rays and forms a part of the partition wall, the window frame member being arranged within the opening formed in the division wall; and a film supporting member having an elongated hole for allowing the X-rays to pass therethrough, the film supporting member being arranged adjacent to the irradiation chamber side of the partition film to support the partition film from the irradiation chamber side. In plan view as viewed from the sample chamber side toward the irradiation chamber side, the film supporting member is arranged so that the elongated hole is parallel to an optical axis of the X-rays.
(2) In the X-ray fluorescence spectrometer according to another aspect of the present disclosure, the X-ray fluorescence spectrometer further includes slits arranged on a trajectory of fluorescent X-rays, the slits including a plurality of parallel flat plates arranged at equal intervals. In plan view as viewed from the sample chamber side toward the irradiation chamber side, the plurality of parallel flat plates are arranged parallel to the elongated hole.
(3) In the X-ray fluorescence spectrometer according to another aspect of the present disclosure, the X-ray fluorescence spectrometer further includes a window frame holding member including an opening for allowing the X-rays to pass therethrough from the irradiation chamber to the sample chamber, the window frame holding member being arranged in the sample chamber to support an outer edge portion of the film supporting member from below.
(4) In the X-ray fluorescence spectrometer according to another aspect of the present disclosure, the film supporting member includes a fitted portion at a position to be in contact with the window frame holding member. The window frame holding member includes a fitting portion at a position to be fitted to the fitted portion when, in plan view as viewed from the sample chamber side toward the irradiation chamber side, the film supporting member is arranged so that the elongated hole is parallel to the optical axis of the X-rays.
(5) In the X-ray fluorescence spectrometer according to another aspect of the present disclosure, the film supporting member is formed from a resin.
(6) In the X-ray fluorescence spectrometer of the present disclosure, the film supporting member is formed from PEEK or PTFE.
(7) In the X-ray fluorescence spectrometer according to another aspect of the present disclosure, the film supporting member is formed from a resin in which at least a part to be irradiated with the X-rays is coated with aluminum.
(8) In the X-ray fluorescence spectrometer according to another aspect of the present disclosure, the film supporting member has a thickness of 1 mm or more.
(9) In the X-ray fluorescence spectrometer according to another aspect of the present disclosure, the film supporting member includes a plurality of the elongated holes, and the plurality of the elongated holes are arranged side by side in a direction orthogonal to the optical axis of the X-rays in plan view as viewed from the sample chamber side toward the irradiation chamber side.
(10) In the X-ray fluorescence spectrometer according to another aspect of the present disclosure, the elongated hole has a width that is equal to or larger than four times an interval between adjacent elongated holes.
(11) In the X-ray fluorescence spectrometer according to another aspect of the present disclosure, the elongated hole has a length that is equal to or larger than four times a width.
(12) In the X-ray fluorescence spectrometer according to another aspect of the present disclosure, the film supporting member is formed from a metal.

### Advantageous Effects of Invention

According to the present disclosure, the intensity of the fluorescent X-rays to be detected is prevented from being reduced, and thus the analytical accuracy can be improved and the measurement time can be shortened.

### Brief Description of Drawings

FIG. 1 is a view illustrating an outline of an X-ray fluorescence spectrometer.
FIG. 2 is a view illustrating a cross section of a sample base.
FIG. 3 is a top view, a side view, and a bottom view of a film supporting member.
FIG. 4 is a projection view in a direction of an arrow from a perspective A of FIG. 1.
FIG. 5 is a projection view in the direction of the arrow from the perspective A of FIG. 1.
FIG. 6 is a projection view in a direction of an arrow from a perspective B of FIG. 1.

### Description of Embodiments

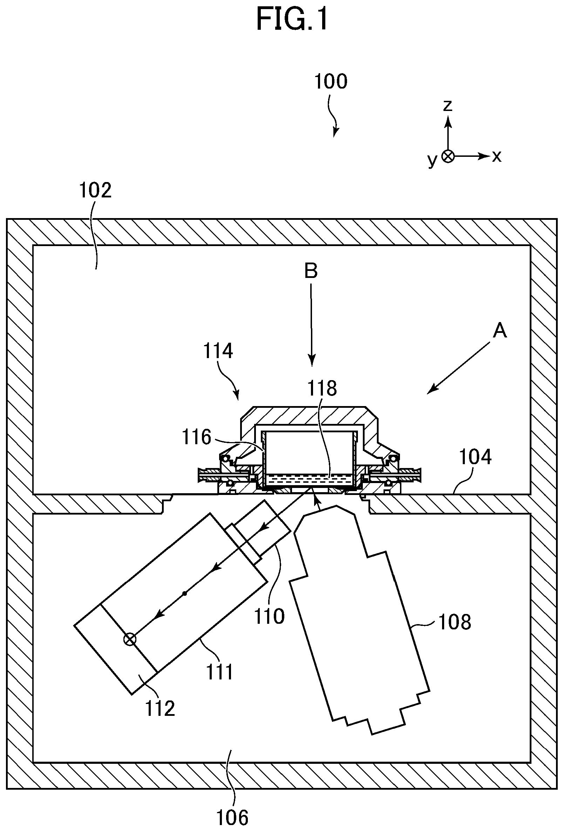

Now, a preferred embodiment for carrying out the present disclosure (hereinafter referred to as "embodiment") will be described with reference to the drawings. FIG. 1 is a view illustrating an outline of an X-ray fluorescence spectrometer 100. As illustrated in FIG. 1, the X-ray fluorescence spectrometer 100 includes: a sample chamber 102 in which a sample 118 is to be arranged; and an irradiation chamber 106 divided from the sample chamber 102 by a partition wall. The sample chamber 102 and the irradiation chamber 106 are divided by the partition wall including a division wall 104, so as to prevent a gas from moving therebetween. The division wall 104 has an opening formed to allow X-rays to pass therethrough from the irradiation chamber 106 to the sample chamber 102.

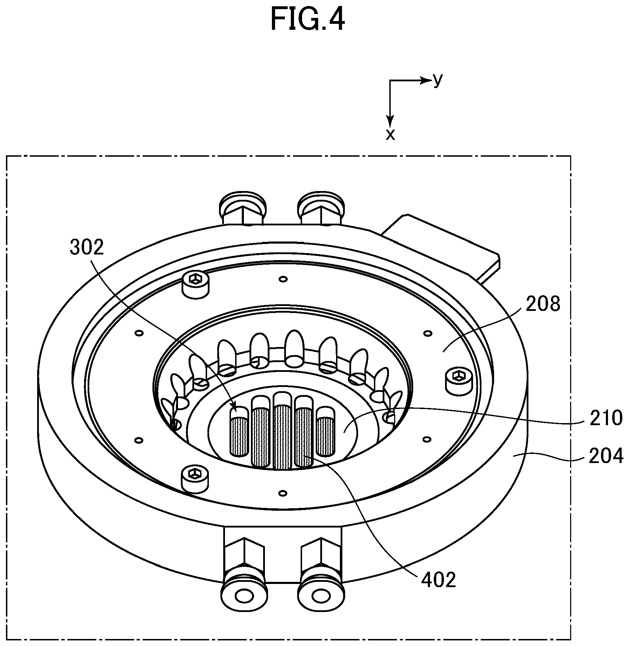

In the irradiation chamber 106, an X-ray source 108 for emitting X-rays, slits 110, a spectroscopic device 111 for dispersing fluorescent X-rays, and a detector 112 for detecting the fluorescent X-rays dispersed by the spectroscopic device 111 are arranged. The X-ray source 108 is arranged in the irradiation chamber 106, and obliquely applies X-rays toward the opening formed in the division wall 104 between the sample chamber 102 and the irradiation chamber 106. The X-ray source 108 irradiates the sample 118 arranged in a sample cell 116 with the X-rays via the opening. The sample 118 irradiated with the X-rays emits fluorescent X-rays. The slits 110 are soller slits which are arranged on a fluorescent X-ray trajectory, and include a plurality of parallel flat plates 402 (see FIG. 4) arranged at equal intervals. The spectroscopic device 111 disperses fluorescent X-rays having a predetermined wavelength among the fluorescent X-rays that have passed through the slits 110. The detector 112 is arranged at a position at which the fluorescent X-rays enter the detector 112, and detects the fluorescent X-rays dispersed by the spectroscopic device 111. The detector 112 is, for example, a proportional counter, and measures the fluorescent X-rays to output a pulse signal. With a counter (not shown) counting the pulse signal output from the detector 112, the intensity of the fluorescent X-rays is acquired. The analysis of the sample 118 is performed based on the intensity of the fluorescent X-rays.

FIG. 1 is a view illustrating a positional relationship among the X-ray source 108, the slits 110, the spectroscopic device 111, and the detector 112 in an x-axis direction and a z-axis direction, and those components are illustrated on the same xz plane. However, the detector 112 is arranged at a position at which the dispersed fluorescent X-rays enter the detector 112, and hence the position of the detector 112 in a y-axis direction is different from the positions of the X-ray source 108, the slits 110, and the spectroscopic device 111 in the y-axis direction.

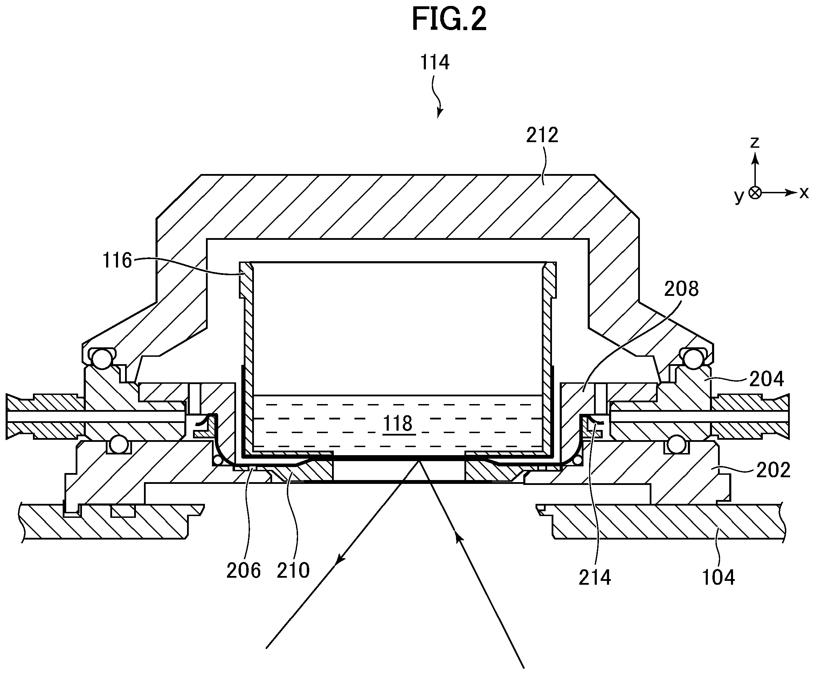

A sample base 114 is provided in the sample chamber 102, and the sample cell 116 is arranged in the sample base 114. The inside of the sample chamber 102 may be filled with helium, or may be filled with air. According to the present disclosure, the measurement can be performed even when the sample 118 is placed in any one of a helium environment or an air environment. In the following, as a case having the simplest measurement method, a case in which the sample 118 is placed in an air environment is described. Further, the sample 118 may be liquid or solid (including powder), but a case in which the sample 118 is liquid is described in the following. The liquid sample is arranged in the sample cell 116. The sample cell 116 has a cylindrical shape, and has a sample holding film attached thereto so as to close a bottom surface. The liquid sample is arranged on the sample holding film. Further, another film may be provided on an upper surface of the sample cell 116 so as to hermetically seal the sample cell 116 in order to prevent the sample 118 from spilling. The sample base 114 includes a window frame holding member, a window frame member 208, a film supporting member 210, and a lid member 212. FIG. 2 is a view illustrating a cross section of the sample base 114.

The window frame holding member includes an opening for allowing X-rays to pass therethrough from the irradiation chamber 106 to the sample chamber 102, and is arranged in the sample chamber 102 to support an outer edge portion 306 of the film supporting member 210 and an outer edge portion of the window frame member 208 from below. Specifically, the window frame holding member includes a lower holding portion 202 and an upper holding portion 204. The lower holding portion 202 and the upper holding portion 204 each include the opening for allowing X-rays to pass therethrough from the irradiation chamber 106 to the sample chamber 102.

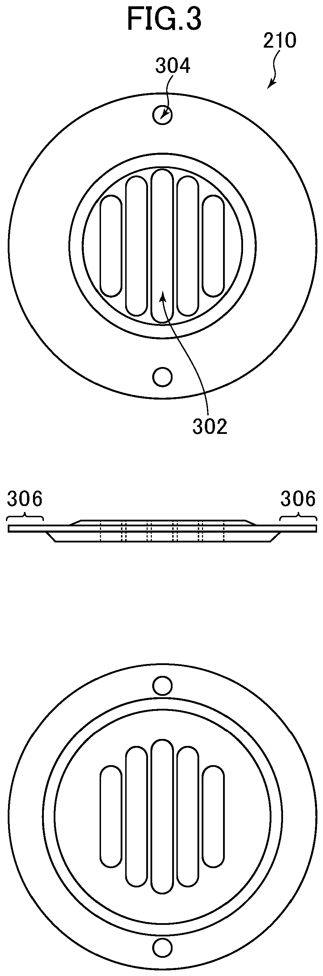

The lower holding portion 202 is a member to be arranged in contact on the division wall 104. The lower holding portion 202 has an outer edge formed into a substantially circular shape in top view and bottom view, and includes a circular opening at a position corresponding to the opening formed in the division wall 104. The opening of the lower holding portion 202 has a shape corresponding to a region excluding the outer edge portion 306 (described later) of the film supporting member 210. Further, as illustrated in FIG. 2, the lower holding portion 202 has a step corresponding to an outer edge of the film supporting member 210. Moreover, the lower holding portion 202 includes a fitting portion 206 to be fitted to a fitted portion 304 (see FIG. 3) of the film supporting member 210. The film supporting member 210 is arranged so that the outer edge is positioned on the step of the lower holding portion 202, a part excluding the outer edge portion is positioned at the opening of the lower holding portion 202, and the fitted portion 304 is fitted to the fitting portion 206 of the lower holding portion 202. In this manner, the lower holding portion 202 supports the outer edge portion 306 of the film supporting member 210.

Further, the lower holding portion 202 supports the window frame member 208 arranged above the film supporting member 210. As illustrated in FIG. 2, the lower holding portion 202 has a step corresponding to an outer edge of a curved part of the window frame member 208. The lower holding portion 202 includes an O-ring at a position at which the step is provided. The O-ring is brought into contact with the curved part of the window frame member 208 when the window frame member 208 is arranged on the lower holding portion 202. In this manner, the window frame member 208 and the lower holding portion 202 are airtightly sealed.

The upper holding portion 204 is a member to be arranged in contact on the lower holding portion 202. The upper holding portion 204 has an outer edge formed into a substantially circular shape in top view and bottom view, and includes a circular opening having the same center position as that of the opening formed in the lower holding portion 202, and a diameter larger than that of the opening formed in the lower holding portion 202. The upper holding portion 204 includes an O-ring at a position to be in contact with the lower holding portion 202. The upper holding portion 204 supports the window frame member 208 together with the lower holding portion 202.

The window frame member 208 holds a partition film 214, and is arranged within the opening formed in the division wall 104. The partition film 214 is formed from a material that transmits X-rays, and forms a part of the partition wall. Specifically, the window frame member 208 holds the partition film 214 which is formed from a material that transmits X-rays and forms a part of the partition wall, and is arranged within the opening of the window frame holding member. The window frame member 208 includes an inner film holding member and an outer film holding member that each have a circular ring shape. The window frame member 208 is arranged within the opening of the window frame holding member in a state in which the partition film 214 is sandwiched between the inner film holding member and the outer film holding member. The partition film 214 present in the opening forms a part of the partition wall.

The film supporting member 210 has an elongated hole 302 for allowing X-rays to pass therethrough, and is arranged adjacent to the irradiation chamber 106 side of the partition film 214 to support the partition film 214 from the irradiation chamber 106 side. FIG. 3 is a top view (upper side), a side view (middle), and a bottom view (lower side) of the film supporting member 210. The side view shows the position of the elongated hole 302 with broken lines. The film supporting member 210 has an outer edge formed into a substantially circular shape in top view and bottom view. As illustrated in FIG. 3, the film supporting member 210 may be provided with the thin outer edge portion 306 to be in contact with the upper surface of the lower holding portion 202. For example, the film supporting member 210 has a circular shape having a diameter excluding the outer edge portion 306 of 30 mm in top view and bottom view.

The film supporting member 210 is formed to have a thickness with which the deformation caused by the pressure difference between the sample chamber 102 and the irradiation chamber 106 is ignorable. Specifically, for example, the thickness of the film supporting member 210 is 1 mm or more, desirably 2 mm or more. The thickness of the outer edge portion 306 to be in contact with the upper surface of the lower holding portion 202 is 0.5 mm. A part of the film supporting member 210 excluding the outer edge portion 306 has a shape corresponding to the shape of the opening of the lower holding portion 202.

The film supporting member 210 includes the fitted portion 304 at a position to be in contact with the window frame holding member. Specifically, for example, the film supporting member 210 includes two holes in the surface of the outer edge portion 306 on the lower side (the side to be in contact with the lower holding portion 202). In FIG. 3, the fitted portion 304 is a through hole, but the fitted portion 304 may be a blind hole or a recess. A cutout may be provided around the film supporting member 210 when the outer edge portion 306 is not included. When the film supporting member 210 includes the outer edge portion 306, the film supporting member 210 is arranged on the lower holding portion 202 so that a part other than the outer edge portion 306 is positioned in the opening of the lower holding portion 202 and the outer edge is positioned on the step of the lower holding portion 202. At this time, the film supporting member 210 is arranged so that the two holes (fitted portion 304) are fitted to protruding portions (fitting portion 206) of the lower holding portion 202.

The film supporting member 210 includes a plurality of elongated holes 302. For example, the film supporting member 210 includes five elongated holes 302 having an elongated shape. It is desired that the length of the elongated hole 302 be equal to or larger than four times the width, and the width of the elongated hole 302 be equal to or larger than four times an interval between adjacent elongated holes 302. For example, each of the elongated holes 302 is formed to have the same width, but to be maximized within the film supporting member 210 excluding the outer edge portion 306. Thus, the elongated holes 302 are longer approaching the center. In the example illustrated in FIG. 3, the lengths of the elongated holes 302 are, from the inner side toward the outer side, 26 mm, 24 mm, and 17 mm. The elongated holes 302 all have the same width, which is 4 mm. The interval of the adjacent elongated holes 302 (width of a beam portion) is 0.5 mm.

A part between the adjacent elongated holes 302 of the film supporting member 210 (hereinafter referred to as "beam portion" for the sake of convenience) supports the partition film 214. In a case of one large opening obtained by coupling a plurality of elongated holes 302 to each other, the partition film 214 is supported only by the outer edge portion 306 of the film supporting member 210. When the sample chamber 102 has an atmospheric pressure and the irradiation chamber 106 is a vacuum, a large force is applied to the partition film 214, and thus the partition film 214 is damaged. However, when the film supporting member 210 is configured to include the plurality of elongated holes 302, as in the present disclosure, the partition film 214 can be supported by the beam portion.

Further, it is desired that the length of the elongated hole 302 be longer as the film supporting member 210 becomes thicker. For example, it is desired that a ratio (thickness/length) of the thickness of the film supporting member 210 to the length of the elongated hole 302 be larger than a ratio ("z" component/"x" component) of a "z" component to an "x" component included in an optical axis of X-rays emitted from the X-ray source. Specifically, when the thickness of the middle portion of the film supporting member 210 is 3.4 mm as described above, as long as the length of the elongated hole 302 is 26 mm, the X-rays can be prevented from being blocked by the film supporting member 210.

The film supporting member 210 is formed from a resin. Specifically, for example, the film supporting member 210 is formed from polyether ether ketone (PEEK) or polytetrafluoroethylene (PTFE). When the film supporting member 210 is produced with use of a metal, interfering rays are emitted, and hence, depending on elements, the analysis cannot be performed. With the film supporting member 210 being formed from a resin that causes few interfering rays, a sample including an element that causes interfering rays can be analyzed. When the film supporting member 210 is formed from a resin, it is desired that a part excluding the outer edge portion 306 have a thickness of 2 mm or more.

Further, the film supporting member 210 may be formed from a resin in which at least a part to be irradiated with X-rays is coated with aluminum. Specifically, for example, aluminum may be thermally sprayed to coat a part excluding the outer edge portion 306 of the film supporting member 210 formed from PEEK or PTFE. In this manner, interfering rays caused by impurities included in the resin can be further reduced.

Moreover, the film supporting member 210 may be formed from a metal. Specifically, for example, the film supporting member 210 may be formed from a metal such as a stainless steel material (SUS) or titanium. With the film supporting member 210 being formed from a metal, the mechanical strength can be improved, and hence the deformation to be caused by the pressure difference between the irradiation chamber 106 and the sample chamber 102 can be suppressed.

The lid member 212 hermetically seals a space in which the sample cell 116 is arranged. Specifically, as illustrated in FIG. 2, the lid member 212 has a shape that covers the space in which the sample cell 116 is arranged, and is arranged in contact with the upper holding portion 204 of the window frame holding member. The lid member 212 includes an O-ring at a position to be in contact with the upper holding portion 204.

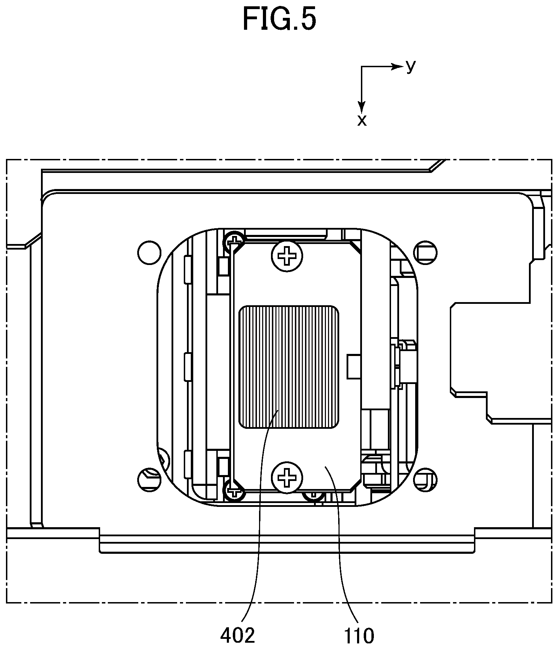

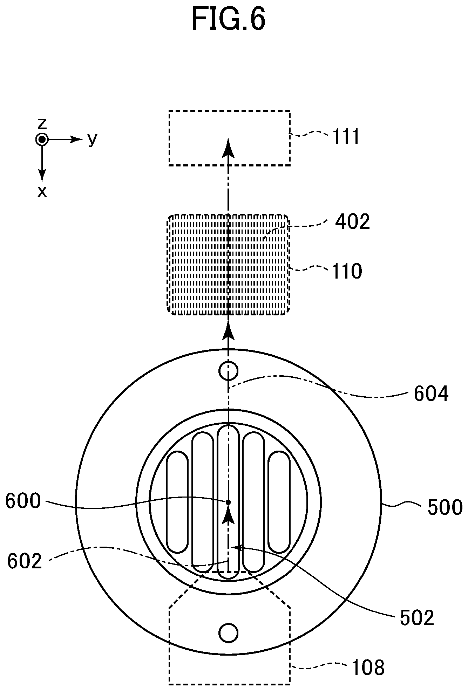

Next, the directions to arrange the elongated holes 302 and the flat plates of the slits 110 will be described. FIG. 4 is a projection view in a direction of an arrow from a perspective A of FIG. 1 in a state in which the lid member 212, the sample cell 116, and the window frame member 208 are removed. FIG. 5 is a projection view in the direction of the arrow from the perspective A of FIG. 1 in a state in which the lid member 212, the sample cell 116, the window frame member 208, the film supporting member 210, and the window frame supporting member are removed. FIG. 6 is a projection view in a direction of an arrow from a perspective B of FIG. 1 in a state in which the lid member 212, the sample cell 116, the window frame member 208, and the window frame supporting member are removed. In FIG. 6, a part of the slits 110 other than the parallel flat plates 402, and the detector 112, are omitted, and the X-ray source 108, the slits 110, and the spectroscopic device 111 arranged below the division wall 104 are indicated by the broken lines.

An optical axis 602 of the X-rays emitted from the X-ray source 108 is oblique to the surface of the sample 118 to be irradiated with the X-rays (that is, a plane including the sample holding film, an xy plane). The optical axis 602 of the X-rays is included in the xz plane. That is, the optical axis 602 of the X-rays includes an x-axis component and a z-axis component but does not include a "y" component.

The film supporting member 210 is arranged so that the elongated hole 302 is parallel to the optical axis 602 of the X-rays in plan view as viewed from the sample chamber 102 side toward the irradiation chamber 106 side (in plan view as viewed in the -z direction). That is, the film supporting member 210 is arranged so that the elongated hole 302 is along the x-axis direction. Further, the plurality of elongated holes 302 are arranged side by side in a direction orthogonal to the optical axis 602 of the X-rays in plan view as viewed from the sample chamber 102 side toward the irradiation chamber 106 side. That is, the film supporting member 210 is arranged so that the plurality of elongated holes 302 are arranged side by side in the y-axis direction.

The film supporting member 210 has a constant thickness, and the optical axis 602 of the X-rays includes the x-axis component. Accordingly, some of the X-rays are blocked by the beam portion of the film supporting member 210 (the X-ray trajectory and the beam portion interfere with each other). However, with the elongated hole 302 being arranged along the x-axis direction, the interference between the X-ray trajectory and the beam portion can be minimized.

Further, in plan view as viewed from the sample chamber 102 side toward the irradiation chamber 106 side, the slits 110 are arranged so that the plurality of parallel flat plates 402 are parallel to the elongated hole 302. On the depth side of the elongated hole 302 of FIG. 4, some of the plurality of parallel flat plates 402 arranged so as to be aligned in direction with the elongated hole 302 illustrated in FIG. 5 are shown. That is, the slits 110 are arranged so that the plurality of parallel flat plates 402 are along the x-axis direction.

As illustrated in FIG. 6, the X-rays emitted from the X-ray source 108 are applied to an irradiation position 600 of the sample 118 via the elongated hole 302. The fluorescent X-rays emitted from the sample 118 pass through the elongated hole 302 and the slits 110 so as to be dispersed by the spectroscopic device 111, and then enter the detector 112. At this time, in plan view as viewed from the sample chamber 102 side toward the irradiation chamber 106 side, the elongated hole 302 is parallel to the optical axis 602 of the X-rays. In other words, the film supporting member 210 is arranged so that the elongated hole 302 is along an intersection (x-axis) of a plane (xz plane) including the optical axis 602 of the X-rays emitted by the X-ray source 108 and an optical axis 604 of the fluorescent X-rays passing through the slits 110 and a plane (xy plane) formed by the film supporting member 210. Further, the fitting portion 206 and the fitted portion 304 are arranged so as to achieve this arrangement relationship. That is, the window frame holding member includes the fitting portion 206 at a position to be fitted to the fitted portion 304 when, in plan view as viewed from the sample chamber 102 side toward the irradiation chamber 106 side, the film supporting member 210 is arranged so that the elongated hole 302 is parallel to the optical axis 602 of the X-rays. Thus, the user can easily arrange the film supporting member 210 so that the elongated hole 302 is parallel to the optical axis 602 of the X-rays.

The fluorescent X-rays emitted from the sample 118 have no particular directivity. However, the elongated hole 302 is arranged along the x-axis direction, and hence some fluorescent X-rays including the "y" component are blocked by the beam portion (the X-ray trajectory and the beam portion interfere with each other). In FIG. 6, the optical axis 604 of the fluorescent X-rays passing through the slits 110 among the emitted fluorescent X-rays is illustrated. Some fluorescent X-rays including the "y" component are blocked by the beam portion, and hence the intensity is higher in the fluorescent X-rays having no "y" component than the fluorescent X-rays having the "y" component among the fluorescent X-rays reaching the irradiation chamber 106. With the slits 110 being arranged so that the plurality of parallel flat plates 402 are parallel to the elongated hole 302, the intensity of the fluorescent X-rays entering the detector 112 can be increased.

Further, the film supporting member 210 is formed from a material that is less deteriorated by X-rays (for example, a thermoplastic resin such as polyether ether ketone), but is desired to be replaced at regular periods. According to the present disclosure, at the time of replacement of the film supporting member 210, the film supporting member 210 can be arranged so that the above-mentioned arrangement is easily obtained.

The present disclosure may be applied to any one of a wavelength-dispersive X-ray fluorescence spectrometer 100 or an energy-dispersive X-ray fluorescence spectrometer 100. Further, the present disclosure can be variously modified without being limited to the above-mentioned embodiment. The configuration of the X-ray fluorescence spectrometer 100 described above is described as one example, and the present disclosure is not limited thereto. The configuration described in the above-mentioned embodiment may be replaced by a configuration that is substantially the same as the configuration described in the above-mentioned embodiment, a configuration that exhibits the same action and effect as those of the configuration described in the above-mentioned embodiment, or a configuration that achieves the same object as that of the configuration described in the above-mentioned embodiment. For example, description has been given of a case in which the outer shape of the film supporting member is a circular shape, but the outer shape may be a polygon or other shapes.

### Reference Signs List

100 X-ray fluorescence spectrometer, 102 sample chamber, 104 division wall, 106 irradiation chamber, 108 X-ray source, 110 slit, 112 detector, 114 sample base, 116 sample cell, 118 sample, 202 lower holding portion, 204 upper holding portion, 206 fitting portion, 208 window frame member, 210 film supporting member, 212 lid member, 214 partition film, 302 elongated hole, 304 fitted portion, 306 outer edge portion, 402 parallel flat plate, 600 irradiation position, 602 optical axis of X-rays, 604 optical axis of fluorescent X-rays

## Claims

1. An X-ray fluorescence spectrometer, which includes: a sample chamber in which a sample is to be arranged; and an irradiation chamber divided from the sample chamber by a partition wall, the X-ray fluorescence spectrometer comprising:
an X-ray source arranged in the irradiation chamber, the X-ray source being configured to obliquely apply X-rays toward an opening formed in a division wall between the sample chamber and the irradiation chamber;
a window frame member configured to hold a partition film which is formed from a material that transmits the X-rays and forms a part of the partition wall, the window frame member being arranged within the opening formed in the division wall; and
a film supporting member having an elongated hole for allowing the X-rays to pass therethrough, the film supporting member being arranged adjacent to the irradiation chamber side of the partition film to support the partition film from the irradiation chamber side,
wherein, in plan view as viewed from the sample chamber side toward the irradiation chamber side, the film supporting member is arranged so that the elongated hole is parallel to an optical axis of the X-rays.

2. The X-ray fluorescence spectrometer according to claim 1, further comprising slits arranged on a trajectory of fluorescent X-rays, the slits including a plurality of parallel flat plates arranged at equal intervals,
wherein, in plan view as viewed from the sample chamber side toward the irradiation chamber side, the plurality of parallel flat plates are arranged parallel to the elongated hole.

3. The X-ray fluorescence spectrometer according to claim 1 or 2, further comprising a window frame holding member including an opening for allowing the X-rays to pass therethrough from the irradiation chamber to the sample chamber, the window frame holding member being arranged in the sample chamber to support an outer edge portion of the film supporting member from below.

4. The X-ray fluorescence spectrometer according to claim 3,
wherein the film supporting member includes a fitted portion at a position to be in contact with the window frame holding member, and
wherein the window frame holding member includes a fitting portion at a position to be fitted to the fitted portion when, in plan view as viewed from the sample chamber side toward the irradiation chamber side, the film supporting member is arranged so that the elongated hole is parallel to the optical axis of the X-rays.

5. The X-ray fluorescence spectrometer according to claim 1 or 2, wherein the film supporting member is formed from a resin.

6. The X-ray fluorescence spectrometer according to claim 5, wherein the film supporting member is formed from PEEK or PTFE.

7. The X-ray fluorescence spectrometer according to claim 1 or 2, wherein the film supporting member is formed from a resin in which at least a part to be irradiated with the X-rays is coated with aluminum.

8. The X-ray fluorescence spectrometer according to claim 1 or 2, wherein the film supporting member has a thickness of 1 mm or more.

9. The X-ray fluorescence spectrometer according to claim 1 or 2,
wherein the film supporting member includes a plurality of the elongated holes, and
wherein the plurality of the elongated holes are arranged side by side in a direction orthogonal to the optical axis of the X-rays in plan view as viewed from the sample chamber side toward the irradiation chamber side.

10. The X-ray fluorescence spectrometer according to claim 1 or 2, wherein the elongated hole has a width that is equal to or larger than four times an interval between adjacent elongated holes.

11. The X-ray fluorescence spectrometer according to claim 1 or 2, wherein the elongated hole has a length that is equal to or larger than four times a width.

12. The X-ray fluorescence spectrometer according to claim 1 or 2, wherein the film supporting member is formed from a metal.
